# EUROPÄISCHE PATENTSCHRIFT

(11) **EP 1 245 789 B1**
(45) Veröffentlichungstag und Bekanntmachung des Hinweises auf die Patenterteilung: **07.12.2005**
(21) Anmeldenummer: 02405079.1
(22) Anmeldetag: 06.02.2002
(51) Int. Cl.: F01D 9/02

(54) **Abgasturbolader**
Exhaust turbocharger
Turbocompresseur d'échappement

(30) Priorität: 30.03.2001 CH 5952001
(43) Veröffentlichungstag der Anmeldung: 02.10.2002
(73) Patentinhaber: ABB Turbo Systems AG, 5400 Baden (CH)
(72) Erfinder: Hansen, Andreas, 5400 Baden (CH); Meier, Reto, 5312 Döttingen (CH); Chappuis, Pierre, 5406 Baden-Rütihof (CH)
(74) Vertreter: ABB Patent Attorneys

(56) Entgegenhaltungen:
- DE-A- 19 838 703
- DE-C- 4 201 677
- GB-A- 1 420 607

## Beschreibung

### TECHNISCHES GEBIET

Bei der Erfindung wird ausgegangen von einem Abgasturbolader nach dem Oberbegriff von Patentanspruch 1. Dieser Turbolader weist eine Abgasturbine und ein Turbinengehäuse auf, in das ein spiralförmig gewundener Einströmkanal eingeformt ist. Der Einströmkanal führt eine Abgasströmung an die Abgasturbine. Hierbei kann die Strömung senkrecht (Radialturbine) oder schräg (Mixed-Flow-Turbine) auf die Eintrittskanten der Turbinenschaufeln auftreffen. Der Einströmkanal ist über einen Einlassstutzen mit einer Abgasleitung einer Brennkraftmaschine verbunden. Da die Abgasströmung je nach Ausbildung und Belastung der Brennkraftmaschine ganz erheblichen Störungen unterworfen ist, weist der Abgasturbolader Mittel auf, welche die Strömung derart weiterleiten, dass sie weitgehend störungsfrei auf die Abgasturbine auftrifft.

### STAND DER TECHNIK

Ein derartiger Abgasturbolader ist beispielsweise in EP 0 131 719 B1, insbesondere Ausführungsform gemäss den Figuren 1 und 2, beschrieben. Bei diesem Abgasturbolader wird die Abgasströmung durch einen Leitapparat mit in radialer Richtung schwenkbaren Laufschaufeln geführt. Durch Schwenken der Laufschaufeln werden Druck- und Geschwindigkeitsschwankungen in der Strömung ausgeglichen und so ein gleichmässiges Anströmen des Abgasturbine erreicht.

Ein solcher Leitapparat ist verhältnismässig aufwendig und benötigt zudem vergleichsweise viel Platz.

Es ist ferner bekannt, dass verwirbelte Luftströmungen vor dem Lufteintritt des Verdichters eines Abgasturboladers durch Strömungsgleichrichter beruhigt werden, um den Wirkungsgrad des Turboladers zu erhöhen. Hierzu wird auf einen in DE 42 01 677 C1 beschriebenen Strömungsgleichrichter verwiesen. Dieser Strömungsgleichrichter besteht aus einem federnden Blechstreifen, der in seiner Längserstreckung zur Bildung von Luftführungskanälen mehrfach gebogen ausgeführt und unter Bildung von Vorspannung in das Luftansaugrohr des Verdichters lagefixiert eingesetzt ist. Ein freies Ende des Blechstreifens dient dazu, zwei innenliegende Luftführungskanäle gegeneinander abzugrenzen. Zur Beruhigung einer Abgasströmung dürfte dieser Strömungsgleichrichter nicht geeignet sein, da das stark drallbehaftete, heisse Abgas das freie Ende des Blechstreifens leicht zu unerwünschten Schwingungen anregen kann. DE 19838703 A1 zeigt eine weitere Ausführungsform eines Strömungsgleichrichters für Abgasturbolader.

### DARSTELLUNG DER ERFINDUNG

Die Erfindung, wie sie in den Patentansprüchen definiert ist, löst die Aufgabe, einen Abgasturbolader der eingangs genannten Art anzugeben, welcher sich trotz einfachen Aufbaus auch bei erschwerten Betriebsbedingungen durch grosse Zuverlässigkeit auszeichnet.

Beim Abgasturbolader nach der Erfindung sind die Leitmittel als Strömungsgleichrichter ausgebildet und ist der Strömungsgleichrichter als mechanisch stabiler Körper im Einlassstutzen des Turbinengehäuses angeordnet. Hierdurch wird erreicht, dass das von der Brennkraftmaschine abgegebene Abgas in Form einer gleichgerichteten Strömung mit geringem Drall über einen Einströmkanal an die Abgasturbine geführt wird. Dies ist vor allem von Vorteil, wenn die Brennkaftmaschine als Gas- oder Dieselmotor ausgeführt ist und eine stark drallbehaftete und/oder grossen zeitlichen Schwankungen unterworfene Abgasströmung an den Turbolader abgibt. Die in einer solchen Strömung vorhandenen Wirbel gelangen nun nicht mehr an die Abgasturbine oder einen der Abgasturbine vorgeschalteten und vorzugsweise als Düsenring ausgeführten Leitapparat. In Abgasturbine und/oder Leitapparat können nun keine unerwünschten Schwingungen angeregt werden, welche zu einem Ausfall des Turboladers führen könnten. Der Strömungsgleichrichter teilt den Einströmkanal in aussenliegende Teilkanäle und in einen Zentral im Einlassstutzen angeordneten und in Wirdungsridstung erstreckten Kanal.

Weist der Strömungsgleichrichter Leitelemente auf mit jeweils einem überwiegend plattenförmig ausgebildeten Abschnitt, welcher im Bereich des Einlassstutzens in Windungsrichtung und senkrecht dazu in radialer Richtung erstreckt ist, so wird die Tangentialkomponente der Abgasströmung in der Abgasleitung der Brennkraftmaschine zum Turbolader entscheidend vermindert. Es wird dann mit grosser Sicherheit verhindert, dass eine stark drallbehaftete Abgasströmung an die Abgasturbine geführt werden kann.

Es empfiehlt sich, die Enden der Leitelemente frei auszubilden, da so durch die heissen Abgase hervorgerufene Wärmedehnungen der Leitelemente keine Spannungen im Strömungsgleichrichter aufbauen können. Zweckmässigerweise sind die freien Enden der Leitelemente auf einem Kreis angeordnet, dessen Radius höchstens die Hälfte des Radius eines Einlassstutzens mit kreisförmigem Querschnitt beträgt. Es werden dann die Tangentialkomponenten der Abgasströmung stark vermindert, hierbei zugleich aber auch die Druckverluste in der Abgasströmung klein gehalten.

Wird das Gehäuse des Abgasturboladers durch Giessen hergestellt, so ist es fertigungstechnisch vorteilhaft, die Leitelemente in die Innenwand des Einlassstutzens einzuformen.

Ist das Gehäuse bereits vorhanden, so kann der Strömungsgleichrichter dann besonders einfach eingebaut werden, wenn er als im Einlassstutzen fixierbare Montageeinheit ausgeführt ist und in Richtung der Rohrachse des Einlassstutzens erstreckte Teilkanäle von trapezähnlichem Querschnitt aufweist. Erste der Teilkanäle sollten an der kleinen Basisseite des Trapezes in einen zentral im Einlassstutzen angeordneten und in Strömungsrichtung des Abgases erstreckten Kanal einmünden. Es werden so die für die thermische Spannungen des Strömungsgleichrichters wichtigen freien Enden der Leitelemente ausgebildet, und es wird die Abgasströmung zugleich an den radial geführten Schenkeln des Trapezes besonders wirksam gleichgerichtet. Eine Verbesserung der Gleichrichterfunktion unter Beibehalt der freien Enden der Leitelemente wird mit einem zwischen zwei der ersten Teilkanäle angeordneten zweiten Teilkanal erzielt, welcher an der kleinen Basisseite des Trapezes geschlossen ausgebildet ist.

Vorzugsweise ist an einem die grosse Basisseite des Trapezes begrenzenden Wandteil des Strömungsgleichrichters ein als Lappen ausgebildetes Befestigungselement angeformt. Ein solches Befestigungselement kann in einfacher Weise durch Abwinkelung auf einen Befestigungsflansch des Einlassstutzens geführt werden. Der Strömungsgleichrichter kann so im Turbolader gegen Verdrehen und Verschieben gesichert fixiert werden.

Fertigungstechnisch leicht kann der Strömungsgleichrichter aus einem in Längsrichtung durch Verbiegen mehrfach plastisch verformten Blechstreifen gebildet werden, dessen Enden etwa durch Schweissen stoffschlüssig miteinander verbunden sind. Durch das stoffschlüssige Verbinden der Enden wird ein mechanisch stabiler Körper gebildet, der den durch die Abgasströmung übertragenen Kräften gut widerstehen kann. Der Blechstreifen ist vorzugsweise aus einer bei der Auspufftemperatur der Abgase oxidations- und korrosionsbeständigen Legierung, etwa auf der Basis Nickel-Chrom oder Nickel-Chrom-Eisen.

Ist der Strömungsgleichrichter in radialer Richtung elastisch verformbar ausgebildet und auf Übermass gegenüber dem Innendurchmesser des Einlassstutzens gefertigt, so kann er mit Hilfe eines geeigneten Montagewerkzeuges unter Vorspannung im Einlassstutzen festgesetzt werden.

### KURZE BESCHREIBUNG DER ZEICHNUNGEN

Die Erfindung wird nachstehend anhand von Ausführungsbeispielen näher erläutert. Hierbei zeigt:
- Fig.1: eine Aufsicht auf einen quer zur Turbinenachse geführten Schnitt durch einen Teil eines spiralförmig ausgebildeten Gehäuses einer ersten Ausführungsform des Abgasturboladers nach der Erfindung im Bereich eines Einlassstutzens für das Abgas,
- Fig.2: eine in Richtung eines Pfeils II geführte Draufsicht auf den Einlassstutzen des Abgasturboladers nach Fig.1,
- Fig.3: eine Draufsicht auf den Einlassstutzen einer zweiten Ausführungsform des Abgasturboladers nach der Erfindung mit einem als Montageeinheit ausgeführten Strömungsgleichrichter,
- Fig.4: eine in Pfeilrichtung geführte Aufsicht auf den längs IV - IV axial geschnittenen Einlassstutzen des Abgasturboladers gemäss Fig.3, und
- Fig.5: eine entsprechend Fig.4 geführte Aufsicht auf eine gegenüber der Ausführungsform nach Fig.3 etwas abgewandelte dritte Ausführungsform des Abgasturboladers nach der Erfindung.

### WEGE ZUR AUSFÜHRUNG DER ERFINDUNG

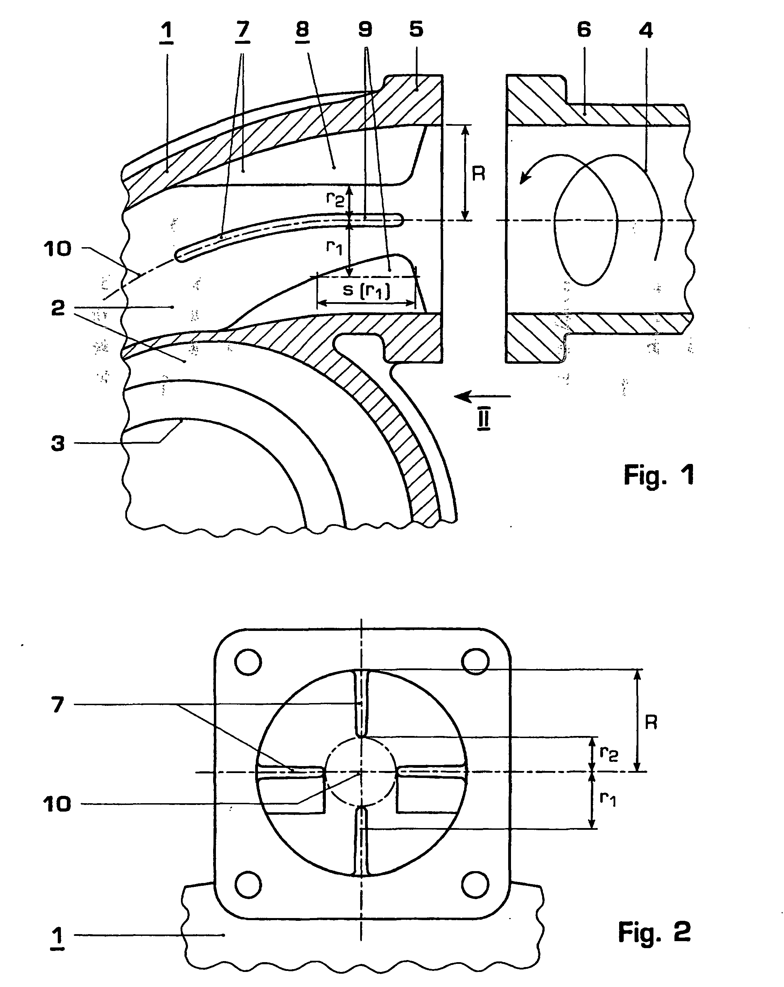

In allen Figuren beziehen sich gleiche Bezugszeichen auf gleichwirkende Teile. In den Figuren 1 und 2 ist von einem Abgasturbolader lediglich ein Teil des Turbinengehäuses 1 dargestellt. An diesem Teil sind Abschnitte eines in das Gehäuse eingeformten, spiralförmig gewundenen Einströmkanals 2 ersichtlich. Dieser Kanal dient der Aufnahme einer an eine Abgasturbine 3 geführten Abgasströmung 4. Hierbei kann die Strömung senkrecht (Radialturbine) oder schräg (Mixed-Flow-Turbine) auf die Eintrittskanten der Turbinenschaufeln auftreffen. Der Einströmkanal 2 beginnt an einem Einlassstutzen 5, welcher mit einer die Abgasströmung führenden Abgasleitung 6 einer Brennkraftmaschine verbunden ist, und ist in Richtung 10 seiner Spiralwindungen geführt. An der Innenwand sind in den Einlassstutzen Leitelemente 7 eines Strömungsgleichrichters 8 eingeformt, welche jeweils in Umfangsrichtung verteilt sind. Jedes Leitelement 7 weist einen überwiegend plattenförmig ausgebildeten Abschnitt 9 auf, welcher sich im Bereich des Einlassstutzens in Windungsrichtung 10 und senkrecht dazu in radialer Richtung erstreckt.

Durch die Ausbildung und Anordnung der Leitelemente 7 wird die Tangentialkomponente der von der Abgasleitung 6 der Brennkraftmaschine aufgenommenen Abgasströmung 4 gestört. Es wird so verhindert, dass eine stark drallbehaftete Abgasströmung 4 an die Abgasturbine 3 geführt werden kann. Unerwünschtes Schwingen der Abgasturbinenschaufeln und ein dadurch bedingter möglicher Ausfall des Abgasturboladers werden so vermieden. Für eine wirksame Gleichrichtung ist das Sehne-zu-Teilungs-Verhältnis grösser 1 gewählt. Hierbei ist die Sehnenlänge bestimmt durch die Länge s(r₁) des Leitelements 7 am Radius r₁ in Windungsrichtung 10. Für n Leitelemente beträgt die Teilung 2π·r₁/n und das Sehne-zu-Teilungs-Verhältnis bestimmt sich dann zu s(r₁)·n/2π·r₁.

Ersichtlich sind die Enden der Leitelemente frei ausgebildet. Von den heissen Abgasen hervorgerufene Wärmedehnungen der Leitelemente können so keine schädlichen Werkstoffspannungen im Strömungsgleichrichter aufbauen. Die freien Enden der Leitelemente sind auf einem Kreis angeordnet, dessen Radius r₂ höchstens die Hälfte des Radius R eines kreisförmigen Querschnitt aufweisenden Einlaufstutzens 5 beträgt. Die tangentiale Komponente der Abgasströmung wird so ausreichend stark unterdrückt. Zugleich werden dann auch die Druckverluste der Abgasströmung im Strömungsgleichrichter 8 klein gehalten.

Dadurch, dass die Leitelemente 7 ins Turbinengehäuse eingeformt sind, ist der Strömungsgleichrichter 8 mechanisch stabil und unempfindlich gegen Schwingungsanregung. Zugleich besteht er dann aus dem gleichen Material wie das Turbinengehäuse und kann der oxidierenden und korrosiven Wirkung der Abgase gut widerstehen.

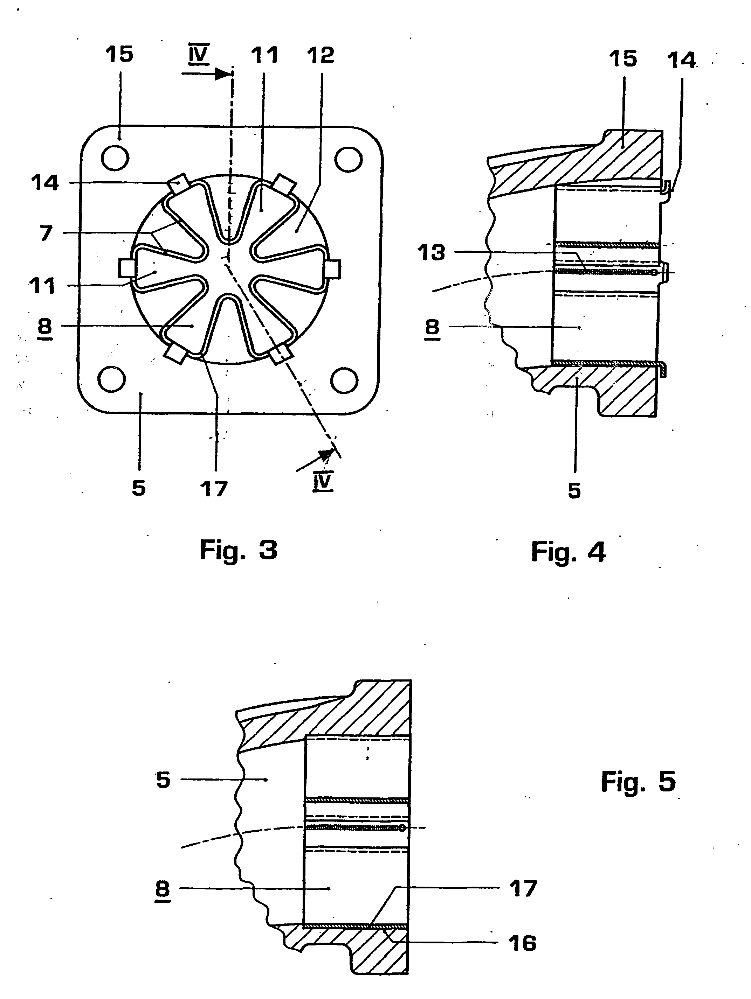

Die Ausführungsform nach den Figuren 1 und 2 ist vorteilhaft, wenn das Turbinengehäuse 1 etwa durch Giessen gefertigt wird und der Strömungsgleichrichter 8 hierbei gleich ins Gehäuse eingeformt werden kann. Soll der Strömungsgleichrichter aber bereits in einen schon existierenden Abgasturbolader eingebaut werden oder gibt es bereits eine Gussform oder eine Werkzeug für das Turbinengehäuse, so ist es günstig, den Abgasturbolader entsprechend den Ausführungsformen nach den Figuren 3 und 4 bzw. Fig.5 auszuführen. Bei diesen Ausführungsformen ist der Strömungsgleichrichter 8 als im Einlassstutzen 5 fixierbare Montageeinheit ausgeführt und weist in Richtung der Rohrachse 10 des Einlassstutzens erstreckte Teilkanäle 11, 12 von trapezförmigem Querschnitt auf. Erste Teilkanäle 11 laufen an der kleinen Basisseite des Trapezes in einen zentral im Einlassstutzen angeordneten und in Windungsrichtung 10 erstreckten Kanal ein. Es werden so die für die thermischen Spannungen des Strömungsgleichrichters 8 vorteilhaften freien Enden der Leitelemente 7 erreicht und wird die Abgasströmung zugleich an den radial geführten Schenkeln des Trapezes besonders wirksam gleichgerichtet. Zwischen zwei ersten Teilkanälen 11 ist einer der zweiten Teilkanäle 12 angeordnet. Bei diesem zweiten Teilkanal und weiteren zweiten Teilkanälen 12 ist die kleine Basisseite des Trapezes jeweils geschlossen ausgebildet. Da die Teilkanäle 12 nach innen abgeschlossen sind, wird in ihnen die Drallkomponente besonders wirksam gestört. Die Gleichrichtung der Abgasströmung wird hierdurch zusätzlich verbessert.

Der in den Ausführungsformen nach den Figuren 3 und 4 bzw. nach Fig.5 verwendete Strömungsgleichrichter ist aus einem in Längsrichtung mehrfach gebogenen Blechstreifen gebildet, dessen Enden etwa durch Schweissen stoffschlüssig miteinander verbunden sind. Durch das stoffschlüssige Verbinden der Enden, erkenntlich an einer aus Fig. 4 ersichtlichen Schweissnaht 13, und ein plastisches Verformen der Blechstreifens unter Bildung der trapezförmig profilierten Teilkanäle 11 und 12 wird ein mechanisch stabiler Körper erreicht, der den durch die heisse Abgasströmung übertragenen Kräften gut widerstehen kann. Der Blechstreifen ist aus einer bei der Auspufftemperatur der Abgase oxidations- und korrosionsbeständigen Legierung, etwa auf der Basis Nickel-Chrom oder Nickel-Chrom-Eisen.

Aus den Figuren 3 und 4 ist ersichtlich, dass an einem die grosse Basisseite des Trapezes begrenzenden Wandteil 17 des Strömungsgleichrichters ein als Lappen 14 ausgebildetes Befestigungselement eingeformt ist. Dieser Lappen ist nach aussen abgewinkelt auf eine radial geführte Fläche eines Befestigungsflansches 15 des Einlassstutzens 5 geführt. Mehrere solcher Lappen 14 setzen den Strömungsgleichricher 8 über die Verpressung mit dem Einströmkanal im Stutzen 5 fest.

Alternativ oder zusätzlich kann wie aus Fig.5 ersichtlich ist, der Strömungsgleichrichter 8 auch in Nuten 16 festgesetzt werden. Diese Nuten sind in die Innenwand des Einlassstutzen eingeformt und erstrecken sich in axialer Richtung (Windungsrichtung 10). In Umfangsrichtung sind sie gegeneinander versetzt angeordnet. Durch Einbringen der Wandseiten 17 des Strömungsgleichrichters 8 in diese Nuten wird der Strömungsgleichrichter wirksam im Einlassstutzen axial fixiert und gegen Verdrehen gesichert.

Eine besonders gute Fixierung des Strömungsgleichrichters im Einlassstutzen 5 wird erzielt, wenn der Strömungsgleichrichter 8 in radialer Richtung elastisch verformbar ausgebildet und auf Übermass gegenüber den Nuten 16 gefertigt ist. Nach Einsetzen des mit einem Montagewerkzeug vorgespannten Strömungsgleichrichters und nachfolgendem Entspannen bewirken Klemmkräfte ein zusätzliches Festsetzen des Strömungsgleichrichters.

### Bezugszeichenliste

- 1: Turbinengehäuse
- 2: Einströmkanal
- 3: Abgasturbine
- 4: Abgasströmung
- 5: Einlassstutzen
- 6: Abgasleitung
- 7: Leitelemente
- 8: Strömungsgleichrichter
- 9: plattenförmige Abschnitte
- 10: Windungsrichtung
- 11, 12: Teilkanäle
- 13: Schweissnaht
- 14: Lappen
- 15: Befestigungsflansch
- 16: Nut
- 17: Wandteil

## Patentansprüche

1. Abgasturbolader mit einer Abgasturbine (3), einem Turbinengehäuse (1), in das ein spiralförmig gewundener und mit einem Einlassstutzen (5) beginnender Einströmkanal (2) eingeformt ist zur Aufnahme einer an die Abgasturbine (3) führbaren Abgasströmung (4) und mit Mitteln zum Leiten der Abgasströmung in Windungsrichtung (10) des Einströmkanals (2), wobei die Leitmittel einen im Einlassstutzen (5) angeordneten Strömungsgleichrichter (8) aufweisen, und der Strömungsgleichrichter (8) als ein mechanisch stabiler Körper ausgebildet ist,
**dadurch gekennzeichnet, dass**
der Strömungsgleichrichter (8) den Einströmkanal (2) in aussenliegende Teilkanäle (11, 12) und in einen zentral im Einlassstutzen angeordneten und in Windungsrichtung (10) erstreckten Kanal teilt.

2. Abgasturbolader nach Anspruch 1, **dadurch gekennzeichnet, dass** der Strömungsgleichrichter (8) die Teilkanäle (11, 12) begrenzende Leitelemente (7) aufweist mit jeweils einem überwiegend plattenförmig ausgebildeten Abschnitt (9), welcher sich im Bereich des Einlassstutzens (5) in Windungsrichtung (10) und senkrecht dazu in radialer Richtung erstreckt.

3. Abgasturbolader nach Anspruch 2, **dadurch gekennzeichnet, dass** die Leitelemente (7) freie Enden aufweisen, welche den zentral im Einlassstutzen angeordneten Kanal begrenzen.

4. Abgasturbolader nach Anspruch 3, **dadurch gekennzeichnet, dass** die freien Enden auf einem Kreis angeordnet sind, dessen Radius (r₂) höchstens die Hälfte des Radius (R) eines Einlassstutzens (5) mit kreisförmigem Querschnitt beträgt.

5. Abgasturbolader nach einem der Ansprüche 1 bis 4, **dadurch gekennzeichnet, dass** die Leitelemente (7) in die Innenwand des Einlassstutzens (5) eingeformt sind.

6. Abgasturbolader nach einem der Ansprüche 1 bis 4, **dadurch gekennzeichnet, dass** der Strömungsgleichrichter (8) als im Einlassstutzen (5) fixierbare Montageeinheit ausgeführt ist und die sich in Windungsrichtung (10) des Einlassstutzens erstreckenden Teilkanäle (11, 12) jeweils trapezförmige Querschnitte aufweisen.

7. Abgasturbolader nach Anspruch 6, **dadurch gekennzeichnet, dass** erste Teilkanäle (11) an der kleinen Basisseite des Trapezes in den zentral im Einlassstutzen angeordneten und in Windungsrichtung (10) des Einlassstutzens (5) erstreckten Kanal einmünden.

8. Abgasturbolader nach Anspruch 7, **dadurch gekennzeichnet, dass** ein jeweils zwischen zwei ersten Teilkanälen (11) angeordneter zweiter Teilkanal (12) an der kleinen Basisseite des Trapezes geschlossen ausgebildet ist.

9. Abgasturbolader nach einem der Ansprüche 6 bis 8, **dadurch gekennzeichnet, dass** an einem die grosse Basisseite des Trapezes begrenzenden Wandteil (17) des Strömungsgleichrichters (8) ein als Lappen (14) ausgebildetes und abgewinkelt auf einen Befestigungsflansch (15) des Einlassstutzens (5) geführtes Befestigungselement angeformt ist.

10. Abgasturbolader nach einem der Ansprüche 6 bis 9, **dadurch gekennzeichnet, dass** der Strömungsgleichrichter (8) einen in Längsrichtung mehrfach verbogenen Blechstreifen aufweist, dessen Enden stoffschlüssig miteinander verbunden sind.

11. Abgasturbolader nach Anspruch 10, **dadurch gekennzeichnet, dass** der Strömungsgleichrichter (8) in radialer Richtung elastisch verformbar ausgebildet und auf Übermass gefertigt ist gegenüber Nuten (16), die in die Innenwand des Einlassstutzens (5) eingeformt sind.

12. Abgasturbolader nach einem der Ansprüche 10 oder 11, **dadurch gekennzeichnet, dass** der Blechstreifen aus einer bei der Auspufftemperatur der Abgase oxidations- und korrosionsbeständigen Legierung gebildet ist.

## Claims

1. Exhaust turbocharger having an exhaust turbine (3), a turbine casing (1) in which a spiral inflow passage (2) starting with an inlet connecting piece (5) is integrally formed for receiving an exhaust-gas flow (4) which can be directed to the exhaust turbine (3), and means for guiding the exhaust-gas flow in the spiral-turn direction (10) of the inflow passage (2), the guide means having a flow rectifier (8) arranged in the inlet connecting piece (5), and the flow rectifier (8) being designed as a mechanically robust body, **characterized in that** the flow rectifier (8) divides the inflow passage (2) into outer partial passages (11, 12) and into a passage arranged centrally in the inlet connecting piece and extending in the spiral-turn direction (10).

2. Exhaust turbocharger according to Claim 1, **characterized in that** the flow rectifier (8) has guide elements (7) defining the partial passages (11, 12) and having in each case a section (9) which is of mainly plate-shaped design and extends in the region of the inlet connecting piece (5) in the spiral-turn direction (10) and perpendicularly thereto in the radial direction.

3. Exhaust turbocharger according to Claim 2, **characterized in that** the guide elements (7) have free ends which define the passage arranged centrally in the inlet connecting piece.

4. Exhaust turbocharger according to Claim 3, **characterized in that** the free ends are arranged on a circle whose radius (r₂) is at most half the radius (R) of an inlet connecting piece (5) of circular cross section.

5. Exhaust turbocharger according to one of Claims 1 to 4, **characterized in that** the guide elements (7) are integrally formed in the inner wall of the inlet connecting piece (5).

6. Exhaust turbocharger according to one of Claims 1 to 4, **characterized in that** the flow rectifier (8) is designed as an assembly unit which can be fixed in the inlet connecting piece (5), and the partial passages (11, 12) extending in the spiral-turn direction (10) of the inlet connecting piece each have trapezoidal cross sections.

7. Exhaust turbocharger according to Claim 6, **characterized in that** first partial passages (11) open at the small base side of the trapezium into the passage arranged centrally in the inlet connecting piece and extending in the spiral-turn direction (10) of the inlet connecting piece (5).

8. Exhaust turbocharger according to Claim 7, **characterized in that** a second partial passage (12) arranged in each case between two first partial passages (11) is designed to be closed at the small base side of the trapezium.

9. Exhaust turbocharger according to one of Claims 6 to 8, **characterized in that** a fastening element designed as a tab (14) and directed in an angled manner onto a fastening flange (15) of the inlet connecting piece (5) is integrally formed on a wall part (17) of the flow rectifier (8), this wall part (17) defining the large base side of the trapezium.

10. Exhaust turbocharger according to one of Claims 6 to 9, **characterized in that** the flow rectifier (8) has a sheet-metal strip which is bent repeatedly in the longitudinal direction and whose ends are integrally connected to one another.

11. Exhaust turbocharger according to Claim 10, **characterized in that** the flow rectifier (8) is designed to be elastically deformable in the radial direction and is produced to oversize relative to grooves (16) which are integrally formed in the inner wall of the inlet connecting piece (5).

12. Exhaust turbocharger according to either of Claims 10 and 11, **characterized in that** the sheet-metal strip is formed from an alloy which is resistant to oxidation and corrosion at the exhaust temperature of the exhaust gases.

## Revendications

1. Turbosoufflante à gaz d'échappement avec une turbine à gaz d'échappement (3), une enveloppe de turbine (1) dans laquelle un canal d'admission (2) tordu en forme de spirale et commençant avec une tubulure d'entrée (5) est moulé en vue de la réception d'un écoulement de gaz d'échappement (4) pouvant être guidé sur la turbine à gaz d'échappement (3) et avec des moyens en vue de conduire l'écoulement de gaz d'échappement dans la direction d'enroulement (10) du canal d'admission (2), les moyens de conduite présentant un redresseur d'écoulement (8) disposé dans la tubulure d'entée (5) et le redresseur d'écoulement (8) étant réalisé en tant que corps stable du point de vue mécanique,
**caractérisée en ce**
**que** le redresseur d'écoulement (8) divise le canal d'admission (2) en des canaux partiels externes (11, 12) et en un canal disposé de manière centrale dans la tubulure d'entrée et s'étendant dans la direction d'enroulement (10).

2. Turbosoufflante à gaz d'échappement selon la revendication 1, **caractérisée en ce que** le redresseur d'écoulement (8) présente des éléments de conduite (7) limitant les canaux partiels (11, 12) avec à chaque fois une section (9) réalisée principalement en forme de plaque qui s'étend dans la région de la tubulure d'entrée (5) dans la direction d'enroulement (10) et perpendiculairement à celle-ci dans la direction radiale.

3. Turbosoufflante à gaz d'échappement selon la revendication 2, **caractérisée en ce que** les éléments de conduite (7) présentent des extrémités libres qui limitent le canal disposé de manière centrale dans la tubulure d'entrée.

4. Turbosoufflante à gaz d'échappement selon la revendication 3, **caractérisée en ce que** les extrémités libres sont disposées sur un cercle dont le rayon (r₂) se monte au plus à la moitié du rayon (R) d'une tubulure d'entrée (5) avec une section transversale en forme de cercle.

5. Turbosoufflante à gaz d'échappement selon l'une quelconque des revendications 1 à 4, **caractérisée en ce que** les éléments de conduite (7) sont moulés dans la paroi interne de la tubulure d'entrée (5).

6. Turbosoufflante à gaz d'échappement selon l'une quelconque des revendications 1 à 4, **caractérisée en ce que** le redresseur d'écoulement (8) est réalisé en tant qu'unité de montage pouvant être fixée dans la tubulure d'entrée (5) et les canaux partiels (11, 12) s'étendant dans la direction d'enroulement (10) de la tubulure d'entrée présentent à chaque fois des sections transversales en forme de trapèze.

7. Turbosoufflante à gaz d'échappement selon la revendication 6, **caractérisée en ce que** des premiers canaux partiels (11) débouchent sur la petite base du trapèze dans le canal disposé de manière centrale dans la tubulure d'entrée et s'étendant dans la direction d'enroulement (10) de la tubulure d'entrée (5).

8. Turbosoufflante à gaz d'échappement selon la revendication 7, **caractérisée en ce qu'**un deuxième canal partiel (12) disposé à chaque fois entre deux premiers canaux partiels (11) est réalisé de manière fermée sur la petite base du trapèze.

9. Turbosoufflante à gaz d'échappement selon l'une quelconque des revendications 6 à 8, **caractérisée en ce qu'**un élément de fixation réalisé en tant que patte (14) et guidé de manière coudée sur une bride de fixation (15) de la tubulure d'entrée (5) est moulé sur une partie de paroi (17) du redresseur d'écoulement (8) limitant la grande base du trapèze.

10. Turbosoufflante à gaz d'échappement selon l'une quelconque des revendications 6 à 9, **caractérisée en ce que** le redresseur d'écoulement (8) présente un ruban de tôle tordu plusieurs fois dans la direction longitudinale dont les extrémités sont reliées ensemble par conjugaison de matières.

11. Turbosoufflante à gaz d'échappement selon la revendication 10, **caractérisée en ce que** le redresseur d'écoulement (8) est réalisé de manière déformable élastiquement dans la direction radiale et est fabriqué à démesure par rapport à des rainures (16) qui sont moulées dans la paroi interne de la tubulure d'entrée (5).

12. Turbosoufflante à gaz d'échappement selon l'une quelconque des revendications 10 ou 11, **caractérisée en ce que** le ruban de tôle est formé d'un alliage résistant à l'oxydation et à la corrosion à la température d'échappement des gaz d'échappement.
